(19) Europäisches Patentamt
European Patent Office
Office européen des brevets

(11) **EP 2 948 349 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **13807921.5**

(22) Anmeldetag: **30.11.2013**

(51) Int Cl.:
**B60T 8/1755** *(2006.01)* **B60T 7/22** *(2006.01)*
**B60W 30/09** *(2012.01)*

(86) Internationale Anmeldenummer:
**PCT/EP2013/003615**

(87) Internationale Veröffentlichungsnummer:
**WO 2014/114310 (31.07.2014 Gazette 2014/31)**

(54) **VERFAHREN ZUM ERMITTELN EINES AUSLÖSEKRITERIUMS FÜR EINE BREMSUNG UND NOTBREMSSYSTEM FÜR EIN FAHRZEUG**

METHOD FOR DETERMINING A TRIGGERING CRITERION FOR BREAKING AND AN EMERGENCY BRAKING SYSTEM FOR A VEHICLE

PROCÉDÉ PERMETTANT DE DÉTERMINER UN CRITÈRE DE DÉCLENCHEMENT D'UN FREINAGE, ET SYSTÈME DE FREINAGE D'URGENCE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2013 DE 102013001228**

(43) Veröffentlichungstag der Anmeldung:
**02.12.2015 Patentblatt 2015/49**

(73) Patentinhaber: **WABCO GmbH**
**30453 Hannover (DE)**

(72) Erfinder:
• **BREUER, Karsten**
**88179 Oberreute (DE)**

• **MEYER, Rüdiger**
**30449 Hannover (DE)**
• **SANDKÜHLER, Dirk**
**59505 Bad Sassendorf (DE)**
• **SULZBACHER, Christian**
**30559 Hannover (DE)**

(74) Vertreter: **Lauerwald, Jörg**
**Wabco GmbH**
**Postfach 91 12 62**
**30432 Hannover (DE)**

(56) Entgegenhaltungen:
**WO-A1-03/006291 WO-A1-2006/042512**
**DE-A1- 4 302 527 DE-A1-102005 002 504**
**DE-A1-102008 062 916**

**Beschreibung**

In Fahrzeugen, insbesondere auch Nutzfahrzeugen, sind zum Teil Notbremssysteme vorgesehen. Hierfür weisen die Fahrzeuge im Allgemeinen eine Umfeldsensorik auf, die insbesondere einen Bereich vor dem Fahrzeug erfasst und mögliche Kollisionen mit den erfassten Objekten ermittelt. Bei Ermittlung eines Kollisionskurses kann ein selbsttätig wirkendes Notbremssystem ausgelöst werden, um eine Kollision zu verhindern oder zumindest in der Aufprallwucht zu verringern.

Bei einem Kollisionskurs kann ein Fahrer statt einer Bremsung jedoch gegebenenfalls auch dem Objekt noch ausweichen. Somit können statt oder ergänzend zu einer Notbremsung auch Ausweichvorgänge ermittelt werden.

Die DE 10 2004 056 027 A1 beschreibt ein Fahrzeugassistenzsystem zur Verhinderung von Kollisionen oder Verminderung der Kollisionsstärke, bei dem in Abhängigkeit der Ermittlung an den Fahrer Warnsignale ausgegeben werden und/oder ein automatischer Lenk- und/oder Bremseingriff durchgeführt werden kann. Somit kann statt einer Bremsung gegebenenfalls ein selbsttätiger Lenkvorgang für ein Ausweichmanöver durchgeführt oder dem Fahrer angezeigt werden.

Die DE 10 2004 028 404 A1 beschreibt die Ermittlung einer Ausweichtrajektorie, wozu die Trajektorie eines vorausfahrenden Fahrzeuges ermittelt wird. Die DE 10 2010 006 214 A1 beschreibt einen Notbremsassistenten zum automatischen Abbremsen, wobei eine Fahrer-Reaktionszeit einbezogen wird, die vor der Einleitung eines Bremsvorganges durch den Fahrer zu berücksichtigen ist. Somit werden die Fahrer-Reaktionszeit, ein Eingriffszeitpunkt für eine Bremsung und ein Ausweichzeitpunkt für einen Ausweichvorgang berechnet. Die DE 103 369 86 A1 beschreibt ein Verfahren zur Vermeidung von Kollisionen eines Fahrzeuges, bei dem Informationen über das Bewegungsverhalten von Objekten in der Umgebung des Fahrzeuges abgespeichert werden. Die DE 100 127 37 B4 beschreibt eine Vorrichtung zur Durchführung eines Fahrspurwechsels durch ein Fahrzeug, bei der eine Trajektorienplanungseinrichtung eingesetzt ist, um ein Übergangskurvensignal zu erzeugen, wobei berücksichtigt wird, dass eine von einem Fahrer des Kraftfahrzeuges vorgebbare Querbeschleunigung nicht überschritten wird. Hierbei wird ein im Wesentliche S-förmige Übergangsbahnkurve ermittelt, bei der die Tangente der Übergangsbahnkurve am Ende des Spurwechsel gleich der ermittelten Tangente der Fahrspur ist. Die Übergangsbahnkurve wird hierbei als Polynom dritter Ordnung angesetzt, um eine sigmoide bzw. S-förmige Funktion des lateralen Versatzes als Funktion eines Längs-Parameters entlang der Fahrbahn zu ermitteln.

Die DE 101 543 21 B4 beschreibt ein Fahrzeugführungsunterstützungs-Steuer- oder Regelsystem, bei dem bei Ermittlung eines Hindernisses auf der Fahrbahn Informationen über das Hindernis gewonnen und ein Ausweichweg bestimmt wird, wobei Karteninformationen herangezogen werden und der Ausweichweg als eine Krümmung mit sinusförmiger mathematischer Funktion der Position des Fahrzeuges entlang des Weges ermittelt wird.

Die DE 10 2010 023 164 A1 beschreibt ein Verfahren zum Warnen eines Fahrers eines Kraftfahrzeuges, bei dem mögliche Kollisionen mit erfassten Objekten ermittelt werden und ein Warnkriterium unter Ansetzen einer berechneten Weglänge zu dem erfassten Objekt berücksichtigt wird, wobei ein Lenkwinkel herangezogen wird. Die DE 10 2010 028 384 A1 beschreibt die Regelung der Fahrstabilität eines Fahrzeuges und der Ermittlung einer Ausweichbahn des Fahrzeuges in kritischen Situationen. In Abhängigkeit der kritischen Situation werden Gierwinkel herangezogen, Soll-Lenkwinkel berechnet und als vorbereitende Maßnahmen Regelschwellen reduziert. Die EP 1057159 B1 beschreibt die Verhinderung einer Kollision eines Fahrzeuges mit einem Hindernis, wobei mehrere Abstände zu dem Fahrzeug ermittelt werden, um zum Einen einen Bremsvorgang mit maximaler Verzögerung und zum Anderen ein Vorbeilenken um das Hindernis zu berücksichtigen; hierbei können halbe Überdeckungen der Fahrzeuge herangezogen werden.

Die EP 1303421 B1 beschreibt ein automatisches Brems- und Lenksystem in einem Fahrzeug, bei dem Ausweichwege um ein Hindernis ermittelt werden und ergänzend berücksichtigt wird, falls im Ausweichweg ein weiteres Hindernis liegt. Die EP 1223093 B1 beschreibt ein automatisches Bremssystem mit Umfelderfassung und der Ermittlung von Spurwechseln und Notbremsungen. Hierbei wird ermittelt, ob der Fahrer die Absicht für einen Spurwechsel hat, und in diesem Fall eine Notbremsung unterdrückt. Die EP 14093211 B1 beschreibt ein Verfahren zur Vermeidung oder Verminderung einer Kollision, bei dem Objekte erfasst und in verschiedene Klassen klassifiziert werden, zum Beispiel Fahrzeug, Motorrad, stehendes Gebäude, wobei die Klassifizierung mittels Formerfassung durch Radar und Ermittlung der Geschwindigkeit der Objekte erfolgt. Die EP 1263634 B1 beschreibt ein Fahrstabilitätsregelungssystem, bei dem eine Trajektorie des Fahrzeuges ermittelt und durch Radeingriffe beeinflusst wird. Hierbei können Karten-und Radarinformationen zur Erfassung der Fahrbahn eingesetzt werden.

Die EP 1409310 B1 beschreibt ein Verfahren zur Prädiktion von Bewegungstrajektorien eines erfassten Objektes, wobei nur mögliche Trajektorien des Objektes ermittelt werden, bei denen die an dem Objekt bzw. erfassten Fahrzeug auftretenden Kräfte innerhalb maximal übertragbarer Werte liegen. Die EP 1926647 B1 beschreibt ebenfalls ein Verfahren zum Ermitteln einer Bewegungstrajektorie, bei der die Bahn des erfassten Objektes extrapoliert wird unter Ansetzen von Polynomen, Exponentialfunktionen oder trigonometrischen Funktionen.

Die EP 1926646 B1 beschreibt ein Verfahren zur Durchführung eines Ausweichmanövers unter Ansetzung von hyperbolischen Tangens-Funktionen und logistischen Funktionen sowie Arcustangensfunktionen. Die US 7,283,902 B2 beschreibt die Ermittlung von Ausweichmanövern unter Einbeziehung der Gierrate. Die EP 1926654 B1 beschreibt weitere mathematische Berechnungen. Die US 8,170,739 B2 beschreibt die Ermittlung einer Ausweichtrajektorie unter mathematischer Berechnung mit Einbeziehung von Gierwinkel und Lenkwinkel, wobei Polynome fünfter Ordnung eingesetzt werden. Die WO 2012/119596 A1 die Bewertung einer Ausweichmöglichkeit in hochdynamischen Situationen unter Prädizierung von Hypothesen und prädiktiver Anzeige von Ausweichmöglichkeiten.

Die Einleitung selbsttätiger Lenkvorgänge ist jedoch im Allgemeinen recht aufwendig und erfordert selbsttätig ansteuerbare Lenkeinrichtungen. Die Durchführung einer Notbremsung, wenn gegebenenfalls noch ein Ausweichmanöver möglich war, kann im Allgemeinen zu unnötigen Problemen und Schäden durch zum Beispiel auffahrende Fahrzeuge führen. Die WO 03/006291 A1 offenbart ein Verfahren zum ermitteln eines Auslösekriterium zur Ausgabe von Bremssignalen gemäß dem Oberbegriff des unabhängigen Anspruchs 1.

Der Erfindung liegt die Aufgabe zu Grunde, ein Verfahren zum Ermitteln eines Auslösekriteriums für eine Bremsung und ein Notbremssystem zu schaffen, die eine hohe Sicherheit ermöglichen. Diese Aufgabe wird durch ein Verfahren nach Anspruch 1 und ein Notbremssystem nach Anspruch 15 gelöst. Die Unteransprüche beschreiben bevorzugte Weiterbildungen.

Der Erfindung liegt der Gedanke zugrunde, die Ausgabe von Brems-Signalen als Warnsignale oder auch Brems-Stellsignale eines selbsttätigen Notbremssystems so lange zu unterdrücken, wie es dem Fahrer noch möglich ist, auszuweichen. Hierdurch können Fehlauslösungen zumindest weitgehend verhindert werden.

Erfindungsgemäß werden hierbei erfasste Objekte unterschiedlich klassifiziert, um in Abhängigkeit der Klassifizierung unterschiedliche Ausweichtrajektorien zu ermitteln. Hierbei wird zwischen einem fahrenden Objekt und einen stationären Objekt unterschieden und in Abhängigkeit dieser Unterscheidung bzw. Klassifizierung unterschiedliche Formen der Ausweichtrajektorien, bzw. unterschiedliche mathematische Formeln für die Ausweichtrajektorie angesetzt.

Dem liegt der Gedanke zugrunde, dass angenommen werden kann, dass ein fahrendes Objekt auf einer Fahrspur im Bereich vor dem eigenen Fahrzeug fährt, insbesondere auf derselben Fahrspur wie das eigene Fahrzeug. Eine Ausweichtrajektorie zur Vermeidung einer Kollision sollte an diesem Objekt vorbeiführen und nachfolgend wieder etwa die gleiche Fahrtrichtung einnehmen; somit kann die Ausweichtrajektorie als Spurwechsel bzw. Vorbeifahren an dem fahrenden Objekt mit nachfolgendem Einscheren ermittelt werden. Die Ausweichtrajektorie wird hierbei vorteilhafterweise mit einem Wendepunkt bzw. S-förmig (sigmoide) ermittelt. Hierbei wird erkannt, dass derartige S-förmige Ausweichtrajektorie in einem mittleren Bereich einen Wendepunkt und davor und dahinter jeweils einen Punkt extremer Querbeschleunigung aufweisen, nämlich maximaler Rechts-Krümmung und LinksKrümmung. Als Extremwert bzw. Extremum der Querbeschleunigung wird hierbei ein Wert der Querbeschleunigung verstanden, der vom Betrag her einen relativen Maximalwert darstellt, das heißt benachbart ist zu Querbeschleunigungs-Werten, die geringere Beträge aufweisen. Für das Ausweichkriterium können somit diese beiden Extremwerte direkt herangezogen, und miteinander und dem Querbeschleunigungs-Grenzwert verglichen werden.

Wird hingegen das erfasste Objekt als stationär klassifiziert, so wird erfindungsgemäß erkannt, dass hier eine Ausweichtrajektorie angesetzt werden kann, die im Wesentlichen eine Kurvenfahrt beschreibt; es kann somit insbesondere eine Ausweichtrajektorie mit konstantem Krümmungsradius bzw. einem Krümmungsradius innerhalb eines Toleranzbereiches herangezogen werden. Dem liegt der Gedanke zugrunde, dass als stationäres Objekt ein Verkehrsschild oder gegebenenfalls ein Objekt der Randbebauung ermittelt wird, und eine Fahrspur gewählt werden kann, die an dem Objekt vorbeiführt. Bei Einsetzen einer derartigen Ausweichtrajektorie mit im Wesentlichen konstantem Krümmungsradius wird somit während der Fahrt auf der Ausweichtrajektorie - bei im Wesentlichen gleicher Fahrgeschwindigkeit - eine im Wesentlichen konstante Querbeschleunigung anzusetzen sein. Hierbei wird erkannt, dass eine derartige Kurvenbahn gegenüber der S-Förmigen Ausweichtrajektorie bei gleicher Fahrgeschwindigkeit zu kleineren Querbeschleunigungen führt; somit kann bei Erfassen eines stationären Objektes ein kleinerer Minimalabstand zugelassen werden, bis das Ausweichkriterium erfüllt ist und ein Ausweichen somit nicht mehr möglich ist.

Zur Ermittlung einer Ausweichtrajektorie mit Kurvenfahrt können ergänzend Kartendaten und Navigationsdaten herangezogen werden, um das Vorhandensein einer derartigen, im Wesentlichen kreisbogenförmig wegführenden Fahrspur zu verifizieren; erfindungsgemäß wird jedoch erkannt, dass grundsätzlich eine derartige Ausweichtrajektorie auch ohne Kartendaten angesetzt werden kann, da derartige Kartendaten oft ungenau bzw. nicht aktuell sind. Dem liegt wiederum der Gedanke zugrunde, dass die Erfindung darauf abzielt, ein Fehlauslösen einer Notbremsung zu verhindern und auch derartige, möglicherweise bestehende Ausweich-Möglichkeiten mit berücksichtigt werden sollen.

Gemäß einer Weiterbildung können mehrere erfasste Objekte, die hinreichend nah beieinander stehen, als gemeinsames Objekt erfasst bzw. bewertet werden, und somit eine Ausweichtrajektorie um die gemeinsam erfassten mehreren Objekte gelegt werden.

Erfindungsgemäß werden die Ausweichtrajektorien vorteilhafterweise relativ zu der eigenen projizierten Fahrspur (Eigen-Trajektorie) bzw. dem Fahrschlauch vor dem eigenen Fahrzeug ermittelt. So wird zum Beispiel bei einer Kurvenfahrt berücksichtigt, dass entsprechend eine Ausweichtrajektorie als Änderung gegenüber der projizierten Eigentrajektorie anzusetzen ist. Hierzu kann als Parameter statt der linearen x-Richtung entlang einer gradlinigen Fahrbahn entsprechend ein Kurvenparameter entlang der Fahrspur gesetzt werden.

Weiterhin können Fahrschlauch-Überlegungen herangezogen werden, um teilweises Überlappen der Fahrzeuge zu berücksichtigen.

Die Erfindung wird im Folgenden anhand der beiliegenden Zeichnungen an einigen Ausführungsformen erläutert. Es zeigen:

Fig. 1    eine Straßenszene in Aufsicht mit einem erfindungsgemäßen Fahrzeug bei Ermittlung eines Ausweichmanövers um ein fahrendes Objekt;

Fig. 2    eine entsprechende Darstellung bei Ermittlung eines Ausweichmanövers um ein stationäres Objekt;

Fig. 3    Darstellung einer gleitenden Sinusfunktion zur Ermittlung einer Ausweichtrajektorie gemäß Fig. 1,

Fig. 4    ein Fahrzeug mit erfindungsgemäßem Notbremssystem,

Fig. 5    ein Flussdiagramm eines erfindungsgemäßen Verfahrens,

Fig. 6    eine Darstellung der Minimalabstände in Abhängigkeit der Relativgeschwindigkeit bei verschiedenen Manövern.

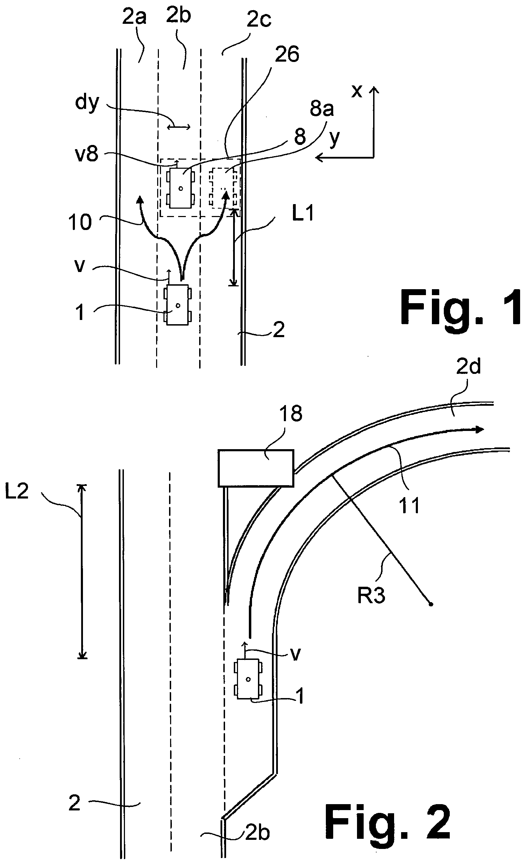

Ein Fahrzeug 1, insbesondere Nutzfahrzeug, fährt gemäß Fig. 1 auf einer Fahrbahn 2 mit drei Fahrspuren 2a, 2b, 2c in einer aktuellen Fahrtrichtung F, mit einer Fahrgeschwindigkeit v. Zum aktuellen Zeitpunkt t0 fährt das Fahrzeug 1 zum Beispiel gradlinig, dass heißt seine Querbeschleunigung q (t0) = 0.

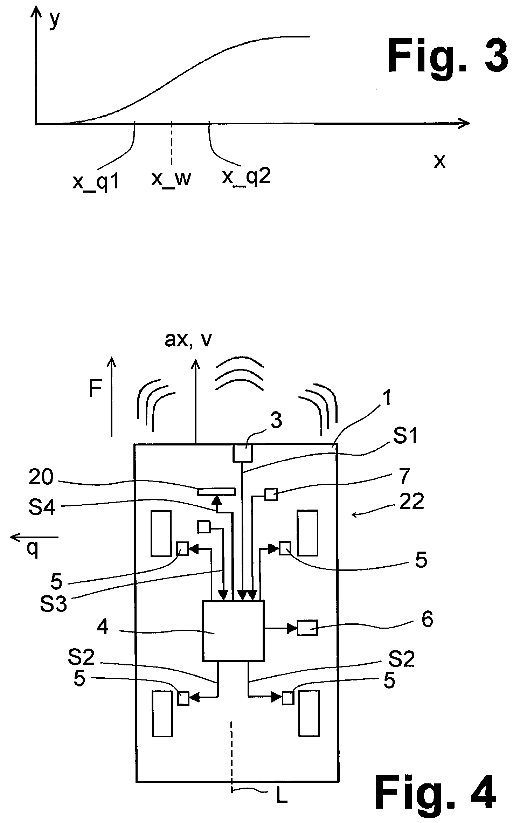

Das Fahrzeug 1 ist in Fig. 4 detaillierter gezeigt und weist eine Umweltsensorik auf, zum Beispiel Abstandssensoren 3 auf Radar- oder Ultraschallbasis zum Erfassen von Objekten vor dem Fahrzeug 1 und gegebenenfalls von Seitenbereichen außerhalb der Fahrbahn 2. Die Umweltsensorik kann ergänzend auch Bereiche seitlich neben dem Fahrzeug 1, oder auch hinter dem Fahrzeug 1 erfassen. Die Umweltsensorik kann zum Beispiel auch Kamerasysteme zum visuellen Erfassen der Fahrbahn aufweisen. Das Fahrzeug 1 weist weiterhin gemäß Fig.4 eine Steuereinrichtung 4 eines Bremssystems oder eines Notbremssystems 22 auf, sowie Brems- Stelleinrichtungen 5, die von der Steuereinrichtung 4 durch Brems-Steuersignale S2 angesteuert werden. Die Steuereinrichtung 4 nimmt Umfeldsensorik-Signale S1 von der Umweltsensorik 3 auf. Die Steuereinrichtung 4 nimmt weiterhin Fahrdynamik-Zustandssignale S3 auf, zum Beispiel über einen fahrzeuginternen Datenbus, die die eigene Fahrgeschwindigkeit v anzeigen, weiterhin zum Beispiel auch eine Längsbeschleunigung ax und/oder Querbeschleunigung q. Hierbei kann die Steuereinrichtung 4 die Fahrgeschwindigkeit v auch zum Beispiel aus Raddrehzahlsignalen ermitteln, und die Längsbeschleunigung ax als zeitliche Ableitung der Fahrgeschwindigkeit v.

Gemäß einer Ausbildung weist das Fahrzeug 1 eine Navigationseinrichtung 7 auf, die die aktuelle Position des Fahrzeug 1 in Kartendaten feststellt und hierzu Kartendaten entweder gespeichert hat oder aktuell aufnimmt.

Gemäß Fig. 1 fährt zu einem Zeitpunkt t0 ein weiteres Fahrzeug 8 als aktiver Verkehrsteilnehmer vor dem Fahrzeug 1 auf derselben, hier mittleren Fahrspur 2b. Das Fahrzeug 1 erfasst das weitere Fahrzeug 8 durch seine Umweltsensorik 3 zunächst als Objekt 8, und speichert die ermittelten Daten des Objektes 8 in einem an die Steuereinrichtung 4 angeschlossenen oder als Teil der Steuereinrichtung 4 ausgebildeten Speicher 6. Hierbei speichert die Steuereinrichtung 4 insbesondere Fahreigenschaften, insbesondere Daten über die Fahrgeschwindigkeit v8, gegebenenfalls auch Längsbeschleunigung a8 und Querbeschleunigung q8 des Objektes 8 über einen zurückliegenden Zeitraum von tz bis t0. Diese Daten dienen zum einen der Klassifizierung des Objektes 8 und zum anderen der Ermittlung, ob ein Kollisionskurs vorliegt; für diese an sich bekannte Ermittlung eines Kollisionskurses können noch weitere ermittelte Daten herangezogen werden, insbesondere Quergeschwindigkeit dvy8, Abstand in Längsrichtung dx8, Querverssatz dy8; alle Daten können hierbei relativ zum Fahrzeug 1 heran gezogen werden.

Die Steuereinrichtung 4 des Fahrzeugs 1 erfasst somit das Objekt 8, klassifiziert es, ermittelt eine Ausweichtrajektorie und entscheidet auf Grundlage eines Ausweichkriteriums K_avoid, ob jeweils ein Ausweichvorgang möglich ist und weiterhin auf Grundlage eines Bremskriteriums K_brake, ob ein Notbremsvorgang erforderlich ist; weiterhin können ergänzende Kriterien hinzutreten. Hierzu im einzelnen:

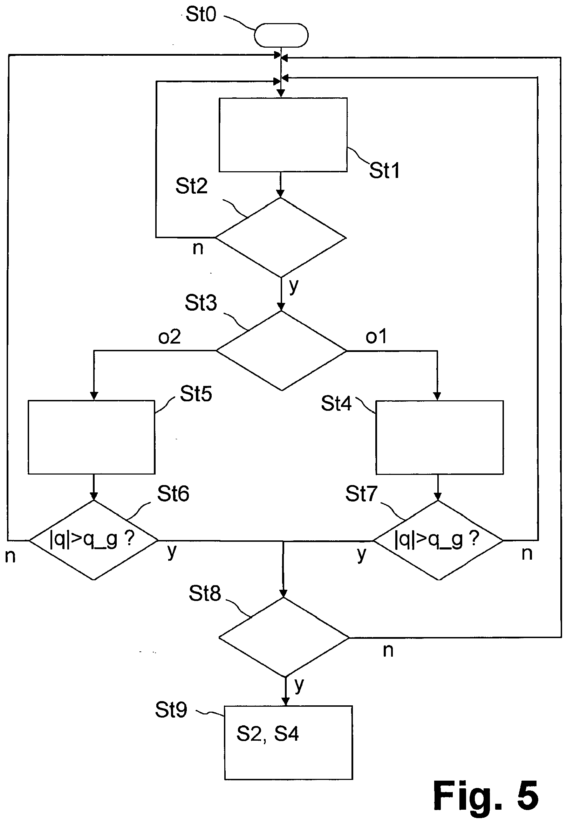

Die Erfassung des Objektes 8 stellt in dem Flussdiagram der Fig. 5 den Schritt St1 dar. Im nachfolgenden Schritt St2 ermittelt die Steuereinrichtung 4, ob das eigene Fahrzeug 1 auf einem Kollisionskurs mit dem erfassten Objekt 8 ist (bzw. das erfasste Objekt 8 auf einem Kollisionskurs mit dem Fahrzeug 1 ist). Hierzu wird ein jeweiliger aktueller Abstand dx8 zum erfassten Objekt 8 detektiert und die aktuelle Eigentrajektorie des Fahrzeugs 1 aufgrund dessen fahrdynamischen Daten, insbesondere Fahrgeschwindigkeit v, Längsbeschleunigung a, Querbeschleunigung q und/oder gegebenenfalls Gierrate ω ermittelt und extrapoliert. Entsprechend wird die aktuelle Trajektorie des bewegten Objektes 8 aufgrund dessen fahrdynamischen Daten relativ zum Eigenfahrzeug, insbesondere lateraler Versatz dy8, laterale relative Geschwindigkeit dvy8, Abstand dx8, relative Längsgeschwindigkeit dvx8 und relative Längsbeschleunignug dax8 extrapoliert, und nachfolgend überprüft, ob die Trajektorien sich in dem darauffolgenden Zeitraum schneiden, was als Kollisionskurs erkannt wird. Im Fall der Fig. 1 mit eindimensionalen Bewegungen des Fahrzeugs 1 und des bewegten Objektes 8 kann somit eine Differentialgleichung zweiter Ordnung in der Zeit, dass heißt unter Berücksichtigung des aktuellen Abstandes dx8, der Differenzgeschwindigkeit v - v8, und den aktuellen Längsbeschleunigungen ax und a8 ermittelt werden.

Bei Fehlen eines Kollisionskurses wird gemäß Verzweigung n vor den ersten Schritt St1 zurück gesetzt, und bei Ermittlung eines Kollisionskurses gemäß Verzweigung y nachfolgend ein Ausweichkriterium K_avoid überprüft wird. Bei der Ermittlung des Ausweichkriteriums K_avoid wird in Schritt St3 das erfasste Objekt 8 zunächst klassifiziert. Hierzu wird ermittelt, ob das erfasste Objekt 8 in einem zurückliegenden Detektionszeitraum von tz bis zum aktuellen Zeitpunkt t0 zumindest zeitweise keinen Stillstand zeigte, dass heißt die Fahrgeschwindigkeit v8 oberhalb eines Messgrenzwertes v_m war, der eine Messungenauigkeit angibt und z. B. einige km/h betragen kann.

Falls im gesamten Detektionszeitraum v8 < v_m war, wird ein erfasstes Objekt als stationäres Objekt erfasst; Fig. 2 zeigt diesen Fall für ein Verkehrsschild 18 als stationäres Objekt 18. Andere Objekte, die zumindest zeitweise v8 > v_m zeigten, werden als bewegte Objekte oder Verkehrsteilnehmer klassifiziert, so auch in Fig. 1 das bewegte Objekt 8, das aktuell v8 > v_m zeigt. Hierbei kann grundsätzlich zwischen aktuell stehenden bewegten Objekten, dass heißt v8 (t0) < v_m, mit v8 > v_m innerhalb von tz bis t0, z. B. Fahrzeuge an einem Stauende oder in einem Unfall, und aktuell fahrenden Objekten 8, die v8 (t0) > v_m zeigen, differenziert werden. Eine derartige Differenzierung in der Klassifizierung ist jedoch grundsätzlich nicht erforderlich.

In Abhängigkeit der Klassifizierung in Schritt St3 werden nachfolgend unterschiedliche Ausweichtrajektorien ermittelt. Bei Ermittlung eines stationären Objektes 18 wird nachfolgend gemäß Verzweigung o1 in Schritt St4 die Ermittlung einer Ausweichtrajektorie 11 für eine Kurvenfahrt ohne Spurwechsel, insbesondere mit im Wesentlichen konstantem Kurvenradius, für ein stationäres Objekt 18 vorgenommen, wie es in Fig. 2 gezeigt ist. Bei Ermittlung eines zumindest zeitweise nicht stehenden Objektes 8, das heißt eines Verkehrsteilnehmers, wird gemäß der Verzweigung o2 in Schritt St5 eine Ausweichtrajektorie 10 für einen Spurwechsel gemäß Fig. 1 ermittelt.

Die Ermittlung der Ausweichtrajektorien in den Schritten St 5 und St4 dient dazu, jeweils eine vom Betrag her maximale Querbeschleunigung q des Fahrzeugs 1 zu ermitteln. Hierfür werden bewusste vereinfachende Trajektorien-Funktionen für die Ausweichtrajektorien 10 und 11 angesetzt.

Zunächst zu dem Fall des Erfassens eines bewegten Objektes 8 gemäß Fig. 1. In Schritt St 5 wird die Ausweichtrajektorie 10 derartig ermittelt, dass ein Spurwechsel von der aktuellen Spur 2b auf eine benachbarte Spur 2a oder 2c erfolgt. Hierbei stimmt die End-Orientierung des Fahrzeuges 1 am Ende der Ausweichtrajektorie 10 bzw. am Ende des Ausweichmanövers im Wesentlichen mit der aktuellen Orientierung überein. Als Orientierung kann hierbei angesetzt werden entweder der Vektor der Fahrgeschwindigkeit v, das heißt die Fahrtrichtung F, oder auch die Ausrichtung der Längsachse L. Es wird eine Ausweichtrajektorie 10 mit einem Wendepunkt x_w angesetzt, das heißt, eine Änderung der Krümmungsrichtung der Ausweichtrajektorie 10. Hierbei wird erfindungsgemäß erkannt, dass die Querbeschleunigung q in der Ausweichtrajektorie 10 zwei Extremwerte aufweist, einen ersten Extremwert x_q1 vor dem Wendepunkt x_w, d.h. der Kurvenbewegung im ersten Bereich der Trajektorie z. B. nach links, und einen zweiten Extremwert x_q2 nach dem Wendepunkt x_w, d.h. in dem zweiten Bereich der Trajektorie mit entgegen gesetztem Einschlag, d.h. z. B. nach rechts..

Bei einem Ausweichvorgang von der mittleren Fahrspur 2b auf die benachbarte linke Fahrspur 2a erfolgt somit zunächst ein Lenkradeinschlag nach links und somit zunächst ein Trajektorienverlauf der Ausweichtrajektorie 10 mit Linkskrümmung. Die Querbeschleunigung q nimmt somit von der aktuellen Geradeausfahrt zunächst bis dem erstem Extremwert x_q1 der Querbeschleunigung q zu; nachfolgend nimmt die Querbeschleunigung q vom Betrag her bis zum Erreichen des Wendepunktes w ab. Im Wendepunkt w liegt eine Änderung der Krümmungsrichtung, hier somit vom Linkseinschlag auf den Rechtseinschlag bzw. von Linkskurve auf Rechtskurve, vor, so dass - bei idealer Annahme ohne zum Beispiel Schleuderverhalten ein NullDurchgang der Querbeschleunigung q vorliegt, das heißt q (t_w) = 0. Nachfolgend nimmt die Querbeschleunigung q vom Betrag bei dem nachfolgendem Trajektorienabschnitt mit Rechtskrümmung wieder zu bis zu dem zweiten Extremwert x_q2, woraufhin die Querbeschleunigung q wieder abnimmt. Die Ausweichtrajektorie 10 in dem ersten Fall der Fig. 1 wird vorteilhafterweise so ermittelt, dass sie glatt bzw. stetig differenzierbar in eine Geradeausfahrt auf der benachbarten Spur 2a übergeht.

Fig. 3 zeigt als Ausweichtrajektorie die besonders bevorzugte gleitende Sinusfunktion $y = x - \sin(x)$, d.h. bezüglich der Koordinaten x, y in dem Koordinatensystem die additive Überlagerung eines linearen Terms und einer trigonometrischen Funktion. Bei Darstellung bzw. Berechnung in einem kartesischen Koordinatensystem wird somit die Längsrichtung der Fahrspur, in Fig. 1 somit die kartesische Koordinate x, und als zweite Koordinate die Querrichtung y genommen. Die Ausweichtrajektorie 10 wird somit als gleitende Sinusfunktion der Beziehung y (x) beschrieben. Hierfür kann in einem einfachen Fall zum Beispiel die gleitende Sinusfunktion $y = x - \sin(x)$ mit y und x als dimensionslosen Zahlen angegeben werden. Der Sinus wird somit auf die Winkeleinheit Radiant bezogen; $\sin(\pi) = \sin(3{,}1415...) = \sin(2\pi) = 0$ und $\sin(\pi/2) = 1$. Erfindungsgemäß wird erkannt, dass hierdurch eine Funktion erreicht wird, die in der ersten Periode, dass heißt von 0 bis $2\pi = 6{,}28...$ eine Funktion mit geeigneter Formgebung erreicht wird, die einen Wendepunkt aufweist, zweimal stetig differenzierbar ist und hierbei auch glatte Übergänge im Anfangszeitpunkt x = 0 und Endzeitpunkt x = 2π aufweist. Hierbei wird als vorteilhaft erkannt, dass die erste und zweite Ableitung jeweils auch trigonometrische Funktionen darstellen, insbesondere auch die zweite Ableitung selbst eine reine trigonometrische Funktion ist; bei der einfachen gleitenden Sinusfunktion y = x - sin (x) ergibt sich somit y' = 1 - x cos (x) und y'' = sin (x). Die Querbeschleunigung wird über die Kurvenkrümmung der Ausweichtrajektorie und der Fahrzeuggeschwindigkeit an den jeweiligen Kurvenpunkten entlang der x-Achse ermittelt:

$$ay(x) = v(x)^2 * \kappa(x)$$

$$\kappa(x) = \frac{y(x)''}{\left(1 + \left(y(x)'\right)^2\right)^{\frac{3}{2}}}$$

Die Extremwerte der Querbeschleunigung werden mit Hilfe der Nullstellen der ersten Ableitung der Querbeschleunigung bestimmt:

$$ay'(x) = 0 \Rightarrow x_{ay1}; x_{ay2}$$
$$\Rightarrow Extremwerte : ay_1 = ay(x_{ay1}); ay_2 = ay(x_{ay2})$$

Die x-Achse stellt die Bewegung in Längsrichtung bzw. Fahrrichtung dar, die y-Achse in Fig. 3 die Bewegung in Querrichtung. Die Funktion wird nachfolgend entsprechend gedehnt bzw. gestreckt. Somit wird in Längsrichtung ein Abstand L herangezogen, weiterhin eine Quererstreckung dy des zu überwindenden Querversatzes. Für den Ausweichvorgang wird somit die Periode 2π des Sinus skaliert auf den Abstand L, und die Ausweichtrajektorie 10 wird in Querrichtung derartig gestreckt, dass der laterale Versatz dy (y(L) = dy) nach dem Abstand L erreicht wird.
Es ergibt sich zunächst folgende Gleichung:

$$y = \frac{dy}{L} x - \frac{dy}{2\pi} \sin\left(\frac{2\pi}{L} x\right)$$

Der Abstand L zum Objekt 8 lässt sich zum Beispiel aus der Summe des aktuellen Abstandes dx zum Zeitpunkt to und dem Abstand, den das Objekt in dem Zeitraum zurücklegt, den das Eigenfahrzeug zum Erreichen des Objekts benötigt, berechnen.
Der notwendige laterale Versatz dy kann sich zum Beispiel aus der Summe von halber Eigenfahrzeugbreite, halber Breite von Objekt 8, Querversatz zwischen Eigenfahrzeug und Objekt, zu dem Zeitpunkt, zu dem das Eigenfahrzeug das Objekt erreicht und einem eventuellen Sicherheitsabstand zusammensetzen.
Die Beträge der Maximalwerte der Beschleunigung q1 und q2 werden in Schritt St6 nachfolgend mit einem Querbeschleunigungs-Grenzwert q_g verglichen, und ermittelt, ob der zulässige Querbeschleunigungs-Grenzwert q_g überschritten wird. Hierzu wird zunächst der vom Betrag her Maximalwert von q1 und q2 ermittelt und nachfolgend mit q_g verglichen werden.
Das Ausweichkriterium für eine nachfolgende Einleitung einer Notbremsung ist hierbei erreicht, wenn der Querbeschleunigungs-Grenzwert q_g überschritten wird und somit kein Ausweichvorgang um ein fahrendes Objekt 8 mehr möglich ist. Somit wird in Schritt St6 bei Nicht-Erfüllen des Ausweichkriteriums K_avoid, bei dem somit ein Ausweichen noch möglich ist, gemäß Verzweigung n zurückgesetzt, und bei Erfüllen des Ausweichkriteriums K_avoid gemäß Verzweigung y nachfolgend ein Bremskriterium untersucht.
Wird in Schritt St3 ermittelt, dass ein stationäres Objekt 18 erfasst worden ist, so wird statt einer Ausweichtrajektorie mit Wendepunkt eine in Fig. 2 gezeigte Ausweichtrajektorie 11 mit im Wesentlichen gleichem Kurvenradius R3 ermittelt derartig, dass auch hier die Ausweichtrajektorie 11 an dem erfassten stationären Objekt 18 vorbeiführt. Insbesondere auch in diesem Fall der Fig. 2 können ergänzend Kartendaten herangezogen werden, um zu ermitteln, ob die Fahrspur der ermittelten Ausweichtrajektorie 11 auf einer zulässigen Fahrspur 2d liegt, zum Beispiel eine Ausfahrt bzw. Verzweigung. Die Ermittlung gemäß Fig. 2 kann jedoch auch ohne Vorliegen derartiger Kartendaten durchgeführt werden, insbesondere wenn eine genaue Positionsbestimmung nicht sicher oder nicht möglich ist. Somit wird gemäß Fig. 2 die Ausweitrajektorie 11 ermittelt als Rechtskurve mit konstantem Radius R3, so dass die auftretende Querbeschleunigung q bei Befahren der Ausweichtrajektorie 11 jeweils in Abhängigkeit der auf der Ausweichtrajektorie gefahrenen Strecke s gegeben ist als q = v(s)$^2$/R3.

Die Querbeschleunigung q ist bei konstanter Fahrgeschwindigkeit v somit auf der Ausweichtrajektorie 11 konstant; bei Änderungen von v, zum Beispiel durch einen Abbremsvorgang ändert sie sich entsprechend. Die in Fig. 2 ermittelte Ausweichtrajektorie 11 mit konstantem Kurvenradius R3 lässt einen geringeren Minimalabstand L2 zu als der Minimalabstand L1 im Fall der Fig. 1; bei gleicher aktueller Fahrgeschwindigkeit v in den Fällen von Fig. 1 und Fig. 2 wird jeweils bei Erreichen des Querbeschleunigungs-Grenzwert q_g somit L2 < L1 sein. Dies bedeutet, dass Ausweichkriterium K_avoid wird gemäß Fig. 2 nicht so schnell erfüllt; es können kleine Minimalabstände L2 erreicht werden, ohne dass das Ausweichkriterium erfüllt wird. Es wird somit in einem Schritt S7, der auf den Schritt St4 folgt, die aktuelle Querbeschleunigung q (v, R3) mit der zulässigen Grenz-Querbeschleunigung q_g verglichen; bei Unterschreiten wird wiederum gemäß Verzweigung n das Verfahren zurückgesetzt, und bei Überschreiten gemäß Verzweigung y nachfolgend in Schritt St8 weitere Kriterien überprüft, sonst gemäß Verzweigung n zurückgesetzt.

In Schritt St8 wird zunächst das Bremskriterium K_brake überprüft, ob ein Notbremsvorgang einzuleiten ist; hierbei können insbesondere ein Notbremsvorgang mit maximaler Bremskraft a_br d.h. es wird z. B. eine Weg-Gleichung in zweiter Ordnung der Zeit angesetzt mit L1 oder L2, v und a,

z. B. als L1< (a_br*t$^2$)/2+vt.

Weiterhin kann eine zeitliche Verzögerung durch eine Betätigungszeit t_akt der Bremsaktuatoren, gegebenenfalls auch einer Reaktionszeit t_react des Fahrers berücksichtigt werden.

Somit wird in Schritt St8 überprüft, ob eine Notbremsung vor dem erfassten Objekt 8 oder 18 möglich ist, wobei hierzu eine selbsttätige Notbremsung und eine nach Warnung des Fahrers durch diesen eingeleitete Notbremsung untersucht werden können. In einem ersten Schritt kann somit zunächst überprüft werden, ob unter Einbeziehung der menschlichen Reaktionszeit t_react der Fahrer nicht selbst eine Notbremsung einleiten kann, d.h. wenn ein Brems-Warnsignal S4 von der Steuereinrichtung 4 an den Fahrer ausgegeben, zum Beispiel an eine Anzeigeeinrichtung 20 im Cockpit-Bereich. Weiterhin kann überprüft werden, ob durch ein Brems-Stellsignal S2 eine selbsttätige Notbremsung einzuleiten ist.

Wenn K_avoid und K_brake erfüllt sind, ist hierdurch ein Auslösekriteriums K_B für eine Bremsung des Fahrzeuges erfüllt. Somit ist im einfachsten Fall K_B durch K_avoid und K_brake gegeben, d.h.

$$K\_B = K\_avoid * K\_brake,$$

wobei die drei Größen jeweils boolesche Werte 1 und 0 annehmen und "1" erfüllt bedeutet.

Ergänzend kann vorteilhafterweise ein Fahrschlauchkriterium angesetzt werden, das teilweise Überlappungen des Fahrzeugs mit dem Objekt 8 oder 18 berücksichtigt.

Falls in Schritt St8 das Auslösekriteriums K_B erfüllt ist, erfolgt in Schiritt St9 die Ausgabe des Brems-Warnsignal S4 und/oder Brems-Stellsignals S2.

Weiterhin kann vorgegeben sein, dass in Schritt St9 auch bei einer Ermittlung, das auch bei sofort eingeleiteter Notbremsung eine Kollision erfolgen wird, entsprechende Brems-Stellsignale S2 an die Brems- Stelleinrichtungen 5 ausgegeben werden, um durch die Notbremsung die Aufprallwucht zu verringern.

Für die Ermittlung der Ausweichtrajektorie 10 kann statt der in Fig. 1 gezeigten kartesischen Koordinaten x, y auch eine gleitende Sinusfunktion in Polarkoordinaten angesetzt werden. Dieses erfolgt bevorzugt in Kurvenfahrten, wo die Ausweichtrajektorie von einem Kurvenradius R1 auf einen anderen R2 überführt wird, welches einem Fahrschlauchwechsel entspricht. Die Kurvenradien R1 und R2 haben jeweils den gleichem Nullpunkt als Bezugspunkt, das heißt mit dem Abstand r zum Nullpunkt und einen Polarwinkel Phi. Wobei die Differenz der Kurvenradien dem seitlichen Versatz entsprechen:

R1-R2 = dy und die Bogenlänge entlang des Radius R1 dem in Längsrichtung verfügbaren Ausweichraum L darstellt. Der Kurvenradius R1 wird nun über den Winkel phi auf den Kurvenradius R2 mit Hilfe der Ausweichtrajektorie geführt:

$$\Rightarrow r(phi) = \frac{dy}{L} phi * R1 - \frac{dy}{2\pi} \sin\left(\frac{2\pi}{L} phi * R1\right) + R1, \; phi \in 0...\frac{L}{R1}$$

$$r(0) = R1$$

$$r\left(\frac{L}{R1}\right) = dy + R1 = R2$$

In der Situation von Fig. 1 und Fig. 2 können auch mehrere erfasste Objekte 8, 18 bei der Ermittlung der jeweiligen Ausweichtrajektorie 10, 11 als gemeinsamer Objektraum 26 zusammengefasst werden. Dies ist in Fig. 1 durch Objekte 8 und 8a gestrichelt angedeutet, die somit als ein gemeinsamer Objektraum 26 bewertet werden, so dass die Ausweichtrajektorie 10 bzw. 11 um das gemeinsame Objekt herum gelegt wird, in Fig. 1 z. B. nach links und nicht nach rechts.

Falls das Fahrzeug 1 mit einer selbsttätigen Lenkung bzw. Lenk-Stelleinrichtung ausgestattet ist, kann auch ein selbsttätiger Ausweichvorgang ermittelt werden.

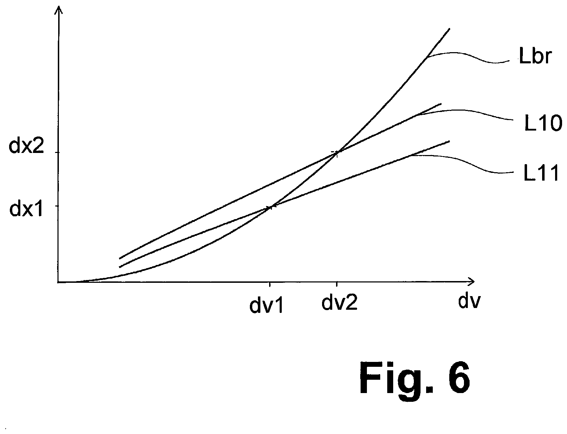

Fig. 6 zeigt eine Darstellung, in der der relative Abstand dx des Fahrzeugs und des Objektes 8 bzw. 18 gegenüber der entsprechenden Relativgeschwindigkeit dv aufgetragen ist. Hierbei zeigt eine Kurve L10 den Minimalabstand L1 den Fall von Fig. 1, d.h. die Ausweichtrajektorie 10 für den Spurwechsel und eine Kurve L11 den Minimalabstand L2 im Fall von Fig. 2, d.h. der Ausweichtrajektorie 11 für die Kurvenfahrt; weiterhin ist eine Kurve Lbr für einen Brems- Minimalabstand eingezeichnet, bei dem eine Vollbremsung des Fahrzeugs 1 gerade noch eine Kollision vermeidet. Interessant sind hierbei insbesondere die markierten Schnittpunkte dx1, dv1 und dx2, dv2 der Kurven L10 und L11 mit Lbr. Grundsätzlich verläuft L11 unterhalb von L10, es gilt hierbei dx1 < dx2 und dv1 < dv2.

Somit kann für die Ausweichtrajektorie 10 der Fig. 1 noch bis dv2 eine Kollision durch eine Bremsung vermieden werden, da die Kurve Lbr bis dahin unterhalb von L10 verläuft; entsprechend kann für die Ausweichtrajektorie 11 der Fig. 2 bis dv1 eine Kollision durch eine Bremsung vermieden werden, da die Kurve Lbr bis dahin unterhalb von L11 verläuft.

Zur Auslösung der Bremsung müssen sowohl das Bremskriterium K_brake als auch das jeweilige Ausweichkriterium K_avoid erfüllt sein. Da gemäß der beschriebenen Ausführungsform nur gebremst wird und ein selbsttätiger Lenkeingriff nicht vorgesehen ist, muss zu einer Unfallverhinderung das Ausweichkriterium K_avoid vor dem Bremskriterium K_brake erfüllt sein. Andernfalls wäre es schon zu spät für eine Bremsung und es kann nur noch die schwere des Unfalls gemindert werden. Mit der Ausweichtrajektorie 10 für den Spurwechsel kann somit bei höheren Relativgeschwindigkeiten dv noch unfallverhindernd gebremst werden, da das Ausweichen schon früher nicht mehr möglich ist.

Bezugszeichenliste (Bestandteil der Beschreibung)

| | |
|---|---|
| 1 | Fahrzeug |
| 2 | Fahrbahn |
| 2a, 2b, 2c, 2d | Fahrspuren |
| 3 | Abstandssensoren |
| 4 | Steuereinrichtung |
| 5 | Brems- Stelleinrichtungen |
| 6 | Speicher |
| 7 | Navigationseinrichtung |
| 8 | bewegtes Objekt (weiteres Fahrzeug) |
| 8a | weiteres bewegtes Objekt |
| 10 | Ausweichtrajektorie für Spurwechsel |
| 11 | Ausweichtrajektorie für Kurvenfahrt |
| 18 | stationäres Objekt (Verkehrsschild) |
| 20 | Anzeigeeinrichtung |
| 22 | Notbremssystem |
| 26 | gemeinsamer Objektraum |

| | |
|---|---|
| F | Fahrtrichtung |
| v | Fahrgeschwindigkeit |
| ax | Längsbeschleunigung |
| q | Querbeschleunigung |
| $\omega$ | Gierrate |
| t | Zeit |
| t0 | aktueller Zeitpunkt |
| tz | zurückliegender Zeitpunkt |
| tz bis t0 | zurückliegender Zeitraum |
| x | x-Richtung, Längsrichtung, kartesische Koordinate |
| y | y-Richtung, Querrichtung, kartesische Koordinate |
| v8 | Fahrgeschwindigkeit |
| a8 | Längsbeschleunigung des Objektes 8 |
| q8 | Querbeschleunigung des Objektes 8 |

dvy8       Quergeschwindigkeit

dx8        Abstand in Längsrichtung

dy8        Querverssatz

S1      Umfeldsensorik-Signale

S2      Brems-Steuersignale

S3      Fahrdynamik-Zustandssignale

S4      Brems-Warnsignal

x_w     Wendepunkt

x_q1    erster Extremwert

x_q2    zweiter Extremwert

dy      lateraler Versatz

dx      Abstand

dvy     laterale relative Geschwindigkeit

dvx     relative Längsgeschwindigkeit

dax     relative Längsbeschleunigung

L1      Minimalabstand für Ausweichtrajektorie 10 in Fig. 1

L2      Minimalabstand für Ausweichtrajektorie 11 in Fig. 2

K_avoid   Ausweichkriterium

K_brake   Bremskriterium

K_B     Auslösekriterium für Bremsung

v_m     Messgrenzwert

q_g      Querbeschleunigungs- Grenzwert

R1, R2    Kurvenradien in Ausweichtrajektorie 10

R3      Kurvenradius in Ausweichtrajektorie 11

phi      Winkel

Lbr     Kurve für Brems- Minimalabstand

L10, L11  Kurven für Ausweichtrajektorien 10, 11

## Patentansprüche

1.  Verfahren zum Ermitteln eines Auslösekriteriums (k_B) zur Ausgabe von Brems-Signalen (S4, S5) in einem Fahrzeug (1), mit mindestens folgenden Schritten:

> Erfassen mindestens eines Objektes (8, 18) im Umfeld des Fahrzeugs (1) (St1),
> Ermitteln, ob das Fahrzeug (1) mit dem Objekt (8, 18) auf einem Kollisionskurs ist (St2),
> bei Ermittlung eines Kollisionskurses mit dem erfassten Objekt (8, 18) Überprüfung eines Ausweichkriteriums (K_avoid), das erfüllt ist, wenn kein Ausweichvorgang für das Fahrzeug (1) ermittelbar oder möglich ist (St3),
> zumindest bei Erfüllung des Ausweichkriteriums Überprüfen eines Bremskriteriums (K_brake) (St8), wobei das Objekt (8, 18) in Abhängigkeit seiner Eigenschaften in mindestens eine erste oder eine zweite Klasse klassifiziert wird, (St3) und
> der Ausweichvorgang des Fahrzeugs (1) in Abhängigkeit der Klassifizierung des Objektes (8, 18) derart ermittelt wird, dass bei Klassifizierung in einer ersten Klasse eine erste Ausweichtrajektorie (10) und bei Klassifizierung in einer zweiten Klasse eine sich von der ersten Ausweichtrajektorie unterscheidende, zweite Ausweichtrajektorie (11) ermittelt wird (St4, St5, St6, St7),
> wobei das Auslösekriterium (K_B) zur Ausgabe von Brems-Signalen (S2, S4) erfüllt ist, wenn das Ausweichkriterium (K_avoid) und das Bremskriterium (K_brake) erfüllt sind,
> **dadurch gekennzeichnet dass**
> das Objekt (8,18) in folgenden Klassen klassifiziert wird:
>
> > - stationäres Objekt (18), das in dem Detektionszeitraum keine Fahrgeschwindigkeit gezeigt hat,
> > - fahrendes oder stehendes Objekt (8), welchem in dem Detektionszeitraum (tz-t0) zumindest zeitweise einmal eine Fahrgeschwindigkeit (v8) oberhalb des Messgrenzwertes (v_m) zugeordnet war, wobei
> > - bei Klassifizierung des erfassten Objektes als fahrendes oder stehendes Objekt (8) eine Ausweichtrajektorie (10) ermittelt wird, bei der eine End-Orientierung des Fahrzeuges innerhalb eines Toleranzbereichs mit der aktuellen Orientierung des Fahrzeuges (1) übereinstimmt und/oder

- bei Klassifizierung des erfassten Objektes als stationäres Objekt (18) eine Ausweichtrajektorie (11) mit einem Kurvenradius (R3) ermittelt wird, der wenigstens in einem Endbereich innerhalb eines Toleranzbereichs konstant ist.

2. Verfahren nach Anspruch 1, **dadurch gekennzeichnet, dass** das Bremskriterium (K_brake) anzeigt, ob ein Notbremsvorgang zur Verhinderung einer Kollision mit dem erfassten Objekt (8, 18) erforderlich ist, und bei Erfüllung des Ausweichkriteriums (K_avoid) und Erfüllung des Bremskriteriums das Brems-Signal (S4) als Brems-Steuersignal (S2) oder Brems-Warnsignal (S2) ausgegeben wird zur Verhinderung der ermittelten Kollision oder zur Verminderung der Schwere der Kollision.

3. Verfahren nach Anspruch 1 oder 2, **dadurch gekennzeichnet, dass** zusätzlich ein Fahrschlauchkriterium bestimmt wird, und das Auslösekriterium (k_B) nur erfüllt ist, wenn auch das Fahrschlauchkriterium erfüllt ist.

4. Verfahren nach einem der vorherigen Ansprüche, **dadurch gekennzeichnet, dass** bei der Klassifizierung des erfassten Objektes (8,18) dessen detektierten geometrischen Eigenschaften (dy) und/oder dynamischen Eigenschaften (d8) in einem zurückliegenden Detektionszeitraum (tz- t0) herangezogen werden, wobei als dynamische Fahreigenschaft mindestens die Fahrgeschwindigkeit (v8) des Objektes (8, 18) oder die Beschleunigung des Objektes herangezogen wird und wobei als geometrische Eigenschaften mindestens einer der folgenden Parameter verwendet wird: Form des Objektes (8, 18), Größe oder Ausdehnung (dy) des Objektes (8, 18), Lage des Objektes (8, 18).

5. Verfahren nach Anspruch 1, **dadurch gekennzeichnet, dass** ein fahrendes oder stehendes Objekt (8) unterteilt wird in

- ein derzeit fahrendes Objekt (8) mit aktueller Fahrgeschwindigkeit (v8) oberhalb des Messgrenzwertes (v_m), und
- ein stehendes Objekt (8), welches aktuell steht und in dem Detektionszeitraum zumindest zeitweise eine Fahrgeschwindigkeit (v8) oberhalb des Messgrenzwertes (v_m) aufweist, wobei gleiche oder gleichartige Ausweichtrajektorien (10) für die Klassifizierungen des Objektes (8) als stehend oder fahrend gebildet werden.

6. Verfahren nach Anspruch 1 oder 5, **dadurch gekennzeichnet, dass** bei Klassifizierung des erfassten Objektes als fahrendes oder stehendes Objekt (8) die Ausweichtrajektorie (10) als Spurwechsel- oder Fahrschlauchwechsel-Trajektorie des Fahrzeugs (1) ermittelt wird.

7. Verfahren nach einem der vorherigen Ansprüche, **dadurch gekennzeichnet, dass** auf Grundlage von Kartendaten/Navigationsdaten ermittelt werden, ob ein Spurverlauf der Ausweichtrajektorie (10) des Fahrzeuges (1) anhand der Kartendaten möglich ist.

8. Verfahren nach einem der vorherigen Ansprüche, **dadurch gekennzeichnet, dass** eine relative Ausweichtrajektorie (10, 11) des Fahrzeugs (1) ermittelt wird, die eine Änderung der Ausweichtrajektorie gegenüber einer projizierten Eigentrajektorie darstellt, wobei die projizierte Eigentrajektorie als Extrapolation einer in einem zurückliegenden Bewertungszeitraum (tz - t0) durchfahrenen Eigentrajektorie ermittelt wird.

9. Verfahren nach Anspruch 8, **dadurch gekennzeichnet, dass** mindestens eine der folgenden Größen in Polarkoordinaten mit einer Winkelvariablen und einer Radius-Variablen ermittelt wird: relative Ausweichtrajektorie, Ausweichtrajektorie, projizierte Eigentrajektorie, Eigentrajektorie, fahrdynamischen Eigenschaften des Fahrzeugs, fahrdynamischen Eigenschaften des erfassten Objektes, Fahrschlauch, Spurwechsel, Fahrschlauchwechsel.

10. Verfahren nach einem der vorherigen Ansprüche, **dadurch gekennzeichnet, dass** die Brems-Signale Brems-Anzeigesignale (S4) zur Warnung eines Fahrers des Fahrzeuges und/oder Brems-Steuersignale (S2) zur Ansteuerung von Brems-Stelleinrichtungen (5) zur Einleitung einer selbsttätigen Bremsung sind.

**11.** Verfahren nach einem der vorherigen Ansprüche **dadurch gekennzeichnet, dass** erfasste Objekte (8, 18) klassifiziert werden, bevor überprüft wird, ob sie auf Kollisionskurs sind.

**12.** Verfahren nach einem der vorhergehenden Ansprüche, **dadurch gekennzeichnet, dass** mehrere benachbarte Objekte (8, 18) zu einem gemeinsamen Objektraum (26) zusammengefasst werden, wobei ein Abstand zwischen den benachbarten Objekten geringer ist als eine Breite oder skalierte Breite des Fahrzeuges (1).

**13.** Verfahren nach einem der vorhergehenden Ansprüche, **dadurch gekennzeichnet, dass** aus der ermittelten Ausweichtrajektorie (10, 11) mindestens ein Extremwert ($x\_q1$, $x\_q2$, $q(v,r)$) der auf das Fahrzeug einwirkenden Querbeschleunigung (q) ermittelt wird und

als Ausweichkriterium (K_avoid) der mindestens eine Extremwert ($x\_q1$, $x\_q2$, $q(v,r)$) mit einem Querbeschleunigungs- Grenzwert ($q\_g$) verglichen wird, wobei das Ausweichkriterium (K_avoid) erfüllt ist, wenn der mindestens eine Extremwert ($x\_q1$, $x\_q2$, $q(v,r)$) vom Betrag größer als der Querbeschleunigungs- Grenzwert ($q\_g$) ist.

**14.** Verfahren nach einem der vorhergehenden Ansprüche, **dadurch gekennzeichnet, dass** ein Minimalabstand (L1, L2), bei dem das Ausweichkriterium (K_avoid) erfüllt ist, bei Klassifizierung des erfassten Objektes als stationäres Objekt (18) kleiner als bei Klassifizierung des erfassten Objektes als fahrendes Objekt (8) oder stehendes Objekt ist.

**15.** Notbremssystem (22) für ein Fahrzeug (1), zur Durchführung eines Verfahrens nach einem der vorherigen Ansprüche aufweisend:

eine Umweltsensorik (3) zur Erfassung mindestens eines Objektes (8, 18) im Umfeld des Fahrzeugs (1), eine Steuereinrichtung (4), die vorgesehen ist

- zur Ermittlung, ob das Fahrzeug (1) mit dem erfassten Objekt (8, 18) auf einem Kollisionskurs ist,
- bei Ermittlung eines Kollisionskurses mit dem erfassten Objekt (8, 18) zur Überprüfung eines Ausweichkriteriums (K_avoid), das erfüllt ist, wenn kein Ausweichvorgang für das Fahrzeug (1) ermittelbar oder möglich ist,
- zumindest bei Erfüllung des Ausweichkriteriums zur Überprüfung eines Bremskriteriums (K_brake) und Ausgabe von Brems-Signalen (S4, S5) in Abhängigkeit der Überprüfung des Bremskriteriums,
- wobei die Steuereinrichtung (4) das Objekt (8, 18) in Abhängigkeit seiner Eigenschaften in mindestens eine erste oder eine zweite Klasse klassifiziert, und

den Ausweichvorgang des Fahrzeugs in Abhängigkeit der Klassifizierung des Objektes (8, 18) derart ermittelt, dass sie bei Klassifizierung in einer ersten Klasse eine erste Ausweichtrajektorie (10) und bei Klassifizierung in einer zweiten Klasse eine zweite, sich von der ersten Ausweichtrajektorie unterscheidende, Ausweichtrajektorie (11) ermittelt.

**16.** Fahrzeug, insbesondere Nutzfahrzeug, mit einem Notbremssystem (22) nach Anspruch 15.

## Claims

**1.** Method for determining a triggering criterion ($k\_B$) for outputting brake signals (S4, S5) in a vehicle (1), comprising at least the following steps:

sensing at least one object (8, 18) in the surroundings of the vehicle (1) (St1),
determining whether the vehicle (1) is on a collision course with the object (8, 18) (St2),
when a collision course with the sensed object (8, 18) is determined, checking an avoidance criterion (K_avoid), which is satisfied if an avoidance manoeuvre cannot be determined or is not possible for the vehicle (1) (St3),
at least when the avoidance criterion is satisfied, checking a braking criterion (K_brake) (St8),
wherein
the object (8, 18) is classified into at least a first or a second class as a function of its properties (St3), and
the avoidance manoeuvre of the vehicle (1) is determined as a function of the classification of the object (8, 18) in such a way that, in the case of classification in a first class, a first avoidance trajectory (10) is determined, and, in the case of classification in a second class, a second avoidance trajectory (11), which differs from the first avoidance trajectory, is determined (St4, St5, St6, St7),
wherein the triggering criterion (K_B) for outputting brake signals (S2, S4) is satisfied if the avoidance criterion (K_avoid) and the braking criterion (K_brake) are satisfied,
**characterized in that**
the object (8, 18) is classified in the following classes:

- stationary object (18) which has not shown a velocity in the detection time period,
- travelling or still object (8), to which a velocity (v8) above the measuring limiting value (v_m) has been assigned once at least temporarily in the detection time period (tz-t0), wherein
- in the case of classification of the sensed object as a travelling or still object (8), an avoidance trajectory (10) is determined, in the case of which a final orientation of the vehicle corresponds to the current orientation of the vehicle (1) within a tolerance range, and/or
- in the case of classification of the sensed object as a stationary object (18), an avoidance trajectory (11) is determined with a bend radius (R3) which is constant within a tolerance range at least in a final region.

2. Method according to Claim 1, **characterized in that** the braking criterion (K_brake) indicates whether an emergency braking manoeuvre for preventing a collision with the sensed object (8, 18) is necessary,
and, when the avoidance criterion (K_avoid) is satisfied and the braking criterion is satisfied, the brake signal (S4) is output as a brake control signal (S2) or a brake warning signal (S2) in order to prevent the determined collision or to reduce the severity of the collision.

3. Method according to Claim 1 or 2, **characterized in that**
a driving corridor criterion is additionally determined,
and the triggering criterion (k_B) is satisfied only when the driving corridor criterion is also satisfied.

4. Method according to one of the preceding claims, **characterized in that**, during the classification of the sensed object (8, 18), its detected geometric properties (dy) and/or dynamic properties (d8) in a preceding detection time period (tz-t0) are used, wherein at least the velocity (v8) of the object (8, 18) or the acceleration of the object is used as a dynamic travel property, and wherein at least one of the following parameters is used as geometric properties: shape of the object (8, 18), size or extent (dy) of the object (8, 18), position of the object (8, 18).

5. Method according to Claim 1, **characterized in that** a travelling or still object (8) is divided into

- a currently travelling object (8) with a current velocity (v8) above the measuring limiting value (v_m), and
- a still object (8) which is currently stationary and in the detection time period has at least temporarily a velocity (v8) above the measuring limiting value (v_m),
wherein identical or similar avoidance trajectories (10) are formed for the classifications of the object (8) as still or travelling.

6. Method according to Claim 1 or 5, **characterized in that**, in the case of classification of the sensed object as a travelling or still object (8), the avoidance trajectory (10) is determined as a lane change trajectory or driving corridor change trajectory of the vehicle (1).

7. Method according to one of the preceding claims, **characterized in that**, on the basis of map data/navigation data, it is determined whether a lane profile of the avoidance trajectory (10) of the vehicle (1) is possible with reference to the map data.

8. Method according to one of the preceding claims, **characterized in that** a relative avoidance trajectory (10, 11) of the vehicle (1) is determined and constitutes a change in the avoidance trajectory in comparison with a projected trajectory for the vehicle,
wherein the projected trajectory for the vehicle is determined as an extrapolation of a trajectory for the vehicle which is passed through in a preceding evaluation time period (tz-t0).

9. Method according to Claim 8, **characterized in that** at least one of the following variables is determined in polar coordinates with an angle variable and a radius variable:

relative avoidance trajectory, avoidance trajectory, projected trajectory for the vehicle,
trajectory for the vehicle, driving dynamics properties of the vehicle, driving dynamics properties of the sensed object, driving corridor, lane change, driving corridor change.

10. Method according to one of the preceding claims, **characterized in that** the brake signals are brake display signals (S4) for warning a driver of the vehicle and/or brake control signals (S2) for actuating brake actuation devices (5) for initiating automatic braking.

11. Method according to one of the preceding claims, **characterized in that** sensed objects (8, 18) are classified before it is checked whether they are on a collision course.

12. Method according to one of the preceding claims, **characterized in that** a plurality of adjacent objects (8, 18) are combined to form a common object space (26), wherein a distance between the adjacent objects is shorter than a width or scaled width of the vehicle (1).

13. Method according to one of the preceding claims, **characterized in that** at least one extreme value (x_q1, x_q2, q(v,r)) of the lateral acceleration (q) acting on the vehicle is determined from the determined avoidance trajectory (10, 11), and

the at least one extreme value (x_q1, x_q2, q(v,r)) is compared with a lateral acceleration limiting value (q_g) as an avoidance criterion (K_avoid), wherein the avoidance criterion (K_avoid) is satisfied if the at least one extreme value (x_q1, x_q2, q(v,r)) is larger in absolute terms than the lateral acceleration limiting value (q_g).

14. Method according to one of the preceding claims, **characterized in that** a minimum distance (L1, L2) at which the avoidance criterion (K_avoid) is satisfied is smaller when the sensed object is classified as a stationary object (18) than when the sensed object is classified as a travelling object (8) or still object.

15. Emergency braking system (22) for a vehicle (1) for carrying out a method according to one of the preceding claims, comprising:

an environment sensor system (3) for sensing at least one object (8, 18) in the surroundings of the vehicle (1), a control device (4) which is provided

- for determining whether the vehicle (1) is on a collision course with the sensed object (8, 18)
- when a collision course with the sensed object (8, 18) is determined, for checking an avoidance criterion (K_avoid) which is satisfied if an avoidance manoeuvre cannot be determined or is not possible for the vehicle (1),
- at least when the avoidance criterion is satisfied, for checking a braking criterion (K_brake) and outputting brake signals (S4, S5) as a function of the checking of the braking criterion,
- wherein the control device (4) classifies the object (8, 18) into at least a first or a second class as a function of its properties and determines the avoidance manoeuvre of the vehicle as a function of the classification of the object (8, 18) in such a way that, in the case of classification in a first class, said control device (4) determines a first avoidance trajectory (10), and, in the case of classification in a second class, said control device (4) determines a second avoidance trajectory (11) which differs from the first avoidance trajectory.

16. Vehicle, in particular utility vehicle, having an emergency braking system (22) according to Claim 15.

## Revendications

1. Procédé pour déterminer un critère de déclenchement (k_B) pour la délivrance de signaux de freinage (S4, S5) dans un véhicule (1), comprenant au moins les étapes suivantes :

détection d'au moins un objet (8, 18) dans l'environnement du véhicule (1) (St1),
détermination si le véhicule (1) se trouve sur une trajectoire de collision avec l'objet (8, 18) (St2),
en cas de détermination d'une trajectoire de collision avec l'objet (8, 18) détecté, contrôle d'un critère d'évitement (K_avoid) qui est rempli lorsqu'aucune manoeuvre d'évitement ne peut être déterminée ou n'est possible pour le véhicule (1) (St3),
contrôle d'un critère de freinage (K_brake), au moins lorsque le critère d'évitement est rempli (St8),
l'objet (8, 18) étant classifié en fonction de ses propriétés en au moins une première ou une deuxième classe (St3) et
la manoeuvre d'évitement du véhicule (1) étant déterminée en fonction de la classification de l'objet (8, 18) de telle sorte qu'une première trajectoire d'évitement (10) est déterminée dans le cas de la classification dans une première classe et, dans le cas de la classification dans une deuxième classe, une deuxième trajectoire d'évitement (11) différente de la première trajectoire d'évitement est déterminée (St4, St5, St6, St7),
le critère de déclenchement (k_B) pour la délivrance de signaux de freinage (S2, S4) étant rempli lorsque le critère d'évitement (K_avoid) et le critère de freinage (K_brake) sont remplis,
**caractérisé en ce que**
l'objet (8, 18) est classifié dans les classes suivantes :

- objet stationnaire (18) qui n'a révélé aucune vitesse de déplacement dans la période de détection,
- objet en déplacement ou à l'arrêt (8) auquel une vitesse de déplacement (v8) supérieure à la valeur limite de mesure (v_m) a été associée une fois au moins temporairement dans la période de détection (tz-t0),
- en cas de classification de l'objet détecté en tant qu'objet en déplacement ou à l'arrêt (8), une trajectoire d'évitement (10) étant déterminée avec laquelle une orientation finale du véhicule coïncide, au sein d'une plage de tolérance, avec l'orientation actuelle du véhicule (1) et/ou
- en cas de classification de l'objet détecté en tant qu'objet stationnaire (18), une trajectoire d'évitement (11) étant déterminée avec un rayon de virage (R3) qui, au sein d'une plage de tolérance, est constant au moins dans une zone finale.

2. Procédé selon la revendication 1, **caractérisé en ce que**
le critère de freinage (K_brake) indique si une opération de freinage d'urgence est nécessaire pour éviter une collision avec l'objet (8, 18) détecté,
et si le critère d'évitement (K_avoid) est rempli et le critère de freinage est rempli, le signal de freinage (S4) est délivré sous la forme d'un signal de commande de frein (S2) ou d'un signal d'alerte de freinage (S2) en vue d'empêcher la collision déterminée ou en vue de réduire la gravité de la collision.

3. Procédé selon la revendication 1 ou 2, **caractérisé en ce qu'**un critère de tunnel de déplacement est en plus défini, et le critère de déclenchement (k_B) n'est rempli que lorsque le critère de tunnel de déplacement est lui aussi rempli.

4. Procédé selon l'une des revendications précédentes, **caractérisé en ce que** lors de la classification de l'objet (8, 18) détecté, ses propriétés géométriques (dy) et/ou propriétés dynamiques (d8) détectées dans une période de détection (tz-t0) écoulée sont utilisées, la propriété de déplacement dynamique utilisée étant au moins la vitesse de déplacement (v8) de l'objet (8, 18) ou l'accélération de l'objet et les propriétés géométriques utilisées étant au moins l'un des paramètres suivants : forme de l'objet (8, 18), taille ou étendue (dy) de l'objet (8, 18), position de l'objet (8, 18).

5. Procédé selon la revendication 1, **caractérisé en ce qu'**un objet en déplacement ou à l'arrêt (8) est subdivisé en

- un objet (8) actuellement en déplacement avec une vitesse de déplacement (v8) actuelle supérieure à la valeur limite de mesure (v_m) et
- un objet (8) à l'arrêt qui est actuellement à l'arrêt et qui présente au moins temporairement dans la période de détection une vitesse de déplacement (v8) supérieure à la valeur limite de mesure (v_m),
des trajectoires d'évitement (10) identiques ou du même type étant formées pour les classifications de l'objet (8) à l'arrêt ou en déplacement.

6. Procédé selon la revendication 1 ou 5, **caractérisé en ce que** lors de la classification de l'objet détecté en tant qu'objet en déplacement ou à l'arrêt (8), la trajectoire d'évitement (10) est déterminée en tant que trajectoire de changement de voie ou de changement de tunnel de déplacement du véhicule (1).

7. Procédé selon l'une des revendications précédentes, **caractérisé en ce que** la possibilité d'un suivi de la voie par la trajectoire d'évitement (10) du véhicule (1) à l'aide des données cartographiques est déterminée sur la base de données cartographiques/données de navigation.

8. Procédé selon l'une des revendications précédentes, **caractérisé en ce qu'**une trajectoire d'évitement (10, 11) relative du véhicule (1) est déterminée, laquelle représente une modification de la trajectoire d'évitement par rapport à une trajectoire propre projetée,
la trajectoire propre projetée étant déterminée en tant qu'extrapolation d'une trajectoire propre parcourue dans une période d'évaluation (tz-t0) écoulée.

9. Procédé selon la revendication 8, **caractérisé en ce qu'**au moins l'une des grandeurs suivantes est déterminée en coordonnées polaires avec une variable d'angle et une variable de rayon :
trajectoire d'évitement relative, trajectoire d'évitement, trajectoire propre projetée, trajectoire propre, propriétés dynamiques de déplacement du véhicule, propriétés dynamiques de déplacement de l'objet détecté, tunnel de déplacement, changement de voie, changement de tunnel de déplacement.

10. Procédé selon l'une des revendications précédentes, **caractérisé en ce que** les signaux de freinage sont des signaux d'indication de freinage (S4) destinés à avertir un conducteur du véhicule et/ou des signaux de commande de frein (S2) destinés à commander des dispositifs d'actionnement de frein (5) en vue d'engager un freinage automatique.

11. Procédé selon l'une des revendications précédentes, **caractérisé en ce que** les objets (8, 18) détectés sont classifiés avant de vérifier s'ils se trouvent sur une trajectoire de collision.

12. Procédé selon l'une des revendications précédentes, **caractérisé en ce que** plusieurs objets (8, 18) voisins sont assemblés en un espace d'objet (26) commun, une distance entre les objets voisins étant inférieure à une largeur ou une largeur mise à l'échelle du véhicule (1).

13. Procédé selon l'une des revendications précédentes, **caractérisé en ce qu'**au moins une valeur extrême (x_q1, x_q2, q(v,r)) de l'accélération transversale (q) agissant sur le véhicule est déterminée à partir de la trajectoire d'évitement (10, 11) déterminée et le critère d'évitement (K_avoid) consistant en une comparaison entre l'au moins une valeur extrême (x_q1, x_q2, q(v,r)) et une valeur limite d'accélération transversale (q_g), le critère d'évitement (K_avoid) étant rempli lorsque la valeur absolue de l'au moins une valeur extrême (x_q1, x_q2, q(v,r)) est supérieure à la valeur limite d'accélération transversale (q_g).

14. Procédé selon l'une des revendications précédentes, **caractérisé en ce qu'**une distance minimale (L1, L2), à laquelle le critère d'évitement (K_avoid) est rempli, est inférieure en cas de classification de l'objet détecté en tant qu'objet stationnaire (18) qu'en cas de classification de l'objet détecté en tant qu'objet en déplacement (8) ou objet à l'arrêt.

15. Système de freinage d'urgence (22) pour un véhicule (1), destiné à mettre en oeuvre un procédé selon l'une des revendications précédentes, comprenant :

un système de détection d'environnement (3) destiné à détecter au moins un objet (8, 18) dans l'environnement du véhicule (1),
un dispositif de commande (4) qui est conçu

- pour déterminer si le véhicule (1) se trouve sur une trajectoire de collision avec l'objet (8, 18) détecté,
- en cas de détermination d'une trajectoire de collision avec l'objet (8, 18) détecté, pour contrôler un critère d'évitement (K_avoid) qui est rempli lorsqu'aucune manoeuvre d'évitement ne peut être déterminée ou n'est possible pour le véhicule (1),
- au moins lorsque le critère d'évitement est rempli, pour contrôler un critère de freinage (K_brake) et délivrer des signaux de freinage (S4, S5) en fonction du contrôle du critère de freinage,
- le dispositif de commande (4) classifiant l'objet (8, 18) en fonction de ses propriétés en au moins une première ou une deuxième classe et

déterminant la manoeuvre d'évitement du véhicule en fonction de la classification de l'objet (8, 18) de telle sorte qu'il détermine une première trajectoire d'évitement (10) dans le cas de la classification dans une première classe et, dans le cas de la classification dans une deuxième classe, une deuxième trajectoire d'évitement (11) différente de la première trajectoire d'évitement.

16. Véhicule, notamment véhicule utilitaire, comprenant un système de freinage d'urgence (22) selon la revendication 15.

**Fig. 1**

**Fig. 2**

Fig. 3

Fig. 4

St0

St1

St2

n

y

St3

o2    o1

St5    St4

St6    St7

|q|>q_g ?    |q|>q_g ?

n    y    y    n

St8

n

y

St9    S2, S4

# Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004056027 A1
- DE 102004028404 A1
- DE 102010006214 A1
- DE 10336986 A1
- DE 10012737 B4
- DE 10154321 B4
- DE 102010023164 A1
- DE 102010028384 A1
- EP 1057159 B1
- EP 1303421 B1
- EP 1223093 B1
- EP 14093211 B1
- EP 1263634 B1
- EP 1409310 B1
- EP 1926647 B1
- EP 1926646 B1
- US 7283902 B2
- EP 1926654 B1
- US 8170739 B2
- WO 2012119596 A1
- WO 03006291 A1